# EUROPEAN PATENT APPLICATION

(11) **EP 3 675 512 A1**
(43) Date of publication of application: **01.07.2020**
(21) Application number: 19220071.5
(22) Date of filing: 30.12.2019
(51) Int. Cl.: H04R 1/02, H04R 3/12, H04R 1/32, B60R 11/02

(54) **TECHNIQUES FOR ROUTING AUDIO CONTENT TO AN ASYMMETRIC SPEAKER LAYOUT WITHIN A VEHICLE**

(30) Priority: 31.12.2018 US 201862787184 P; 26.12.2019 US 201916727748
(71) Applicant: Harman International Industries, Incorporated, Stamford, CT 06901 (US)
(72) Inventor: WINTON, Riley, Stamford, CT 06901 (US); LUDWIG, Christopher, Stamford, CT 06901 (US); TRESTAIN, Christopher, Stamford, CT 06901 (US)
(74) Representative: Rummler, Felix

(57) **Abstract**

A vehicle audio system providing separation of audio content between vehicle occupants via an asymmetric speaker layout. The vehicle audio system includes a speaker set located at an occupant-centered component, such as a headrest or seat, having an asymmetric speaker layout. The occupant-centered component includes a speaker set at only a left side or a right side, and does not include speaker sets at both left and right sides. Therefore, the speaker set is arranged so that substantially all the broadcast audio content is audible only to the corresponding occupant. The vehicle audio system further includes an audio engine coupled to a plurality of speaker sets installed within the vehicle. The audio engine receives audio signals from various vehicle subsystems and routes the audio signals to one or more speaker sets within the vehicle based on the received audio signal.

## Description

### CROSS-REFERENCE TO RELATED APPLICATIONS

This application claims priority benefit of the United States Provisional Patent Application titled, "ASYMMETRIC SPEAKER LAYOUT FOR STEERED AUDIO PROMPTS AND CONTENT," filed on December 31, 2018 and having Serial No. 62/787,184. The subject matter of this related application is hereby incorporated herein by reference.

### BACKGROUND

### Field of the Embodiments

The present disclosure relates generally to vehicle audio systems and, more specifically, to techniques for routing audio content to an asymmetric speaker layout within a vehicle.

### Description of the Related Art

In conventional automotive audio systems, multiple audio loudspeakers are typically used to provide audio content for all passengers within the vehicle. One problem with conventional automotive audio systems is that certain types of audio content is useful to or intended to be transmitted to only some occupants within a vehicle. For instance, audio-based navigation prompts are useful only to the driver of the vehicle and typically disturb other occupants within the vehicle. Consequently, broadcasting navigation prompts to all occupants of the vehicle via the automotive audio system within the vehicle is undesirable.

Traditional solutions to the above problem generally involve implementing multiple symmetric speakers for each occupant of the vehicle, which requires the vehicle to have a relatively large number of speakers as well as high-channel audio amplifiers. For instance, traditional designs may incorporate multiple symmetric speakers into the headrest of each seat within a vehicle in order to transmit audio content to the occupant of each seat. Traditional solutions also involve implementing computationally-expensive digital signal processing to provide sound cancellation at various locations within a vehicle. For example, when presenting audio navigation prompts to the driver of a vehicle, the vehicle audio system may provide sound cancellation at other locations in the vehicle to block the audio navigation prompts from being transmitted to the other occupants of the vehicle. Because traditional solutions require additional audio output devices and/or audio processing devices, traditional solutions increase the complexity, size, weight, and cost of automotive audio systems.

As the foregoing illustrates, what is needed in the art are more effective techniques for providing audio content to occupants within a vehicle.

### SUMMARY

Various embodiments include a vehicle audio system comprising a first set of speakers located at a first side of an occupant-centered component. The occupant-centered component comprises an interior vehicle component having an asymmetric speaker layout. The vehicle audio system further comprises an audio engine coupled to the first set of speakers. In operation, the audio engine routes a first audio signal to the first set of speakers to provide audio content to a first occupant location within a vehicle.

At least one technical advantage of the disclosed techniques relative to the prior art is that the disclosed techniques enable audio content to be transmitted separately to different vehicle occupants via a simple, small, and lightweight vehicle audio system. In that regard, the vehicle audio system includes a first set of speakers located at an occupant-centered component (such as a headrest or seat) having an asymmetric speaker layout. For example, the occupant-centered component could include speakers at only the left side or the right side of the occupant-centered component, but would not include speakers at both the left side and the right side. The first set of speakers is directed towards a first vehicle occupant to provide audio content to the first vehicle occupant. By orienting/pointing the first set of speakers towards the first vehicle occupant, most of the acoustic energy is passively directed toward the first vehicle occupant, and therefore, much less acoustic energy is directed towards the other occupants and regions of the vehicle. An audio engine routes particular audio signals to only the first set of speakers and not to other sets of speakers within the vehicle. For example, the audio engine could route audio navigation prompts to only the first set of speakers located at within the driver seat headrest, but not to any of the other sets of speakers within the vehicle. In this manner, the disclosed techniques allow audio content to be transmitted separately to different vehicle occupants without relying on complex sound cancellation techniques, while also reducing the number of audio components relative to prior approaches. These technical advantages represent one or more technological advancements over prior art solutions.

### BRIEF DESCRIPTION OF THE DRAWINGS

So that the manner in which the recited features of the one or more embodiments set forth above can be understood in detail, a more particular description of the one or more embodiments, briefly summarized above, may be had by reference to certain specific embodiments, some of which are illustrated in the appended drawings. It is to be noted, however, that the appended drawings illustrate only typical embodiments and are therefore not to be considered limiting of its scope in any manner, for the scope of the various embodiments subsumes other embodiments as well.
Figure 1 is a block diagram of a vehicle audio system configured to implement one or more aspects of the various embodiments;
Figure 2 illustrates an exemplary asymmetric speaker layout that can be implemented in the vehicle audio system of Figure 1, according to various embodiments;
Figure 3 illustrates an exemplary alternative asymmetric speaker layout that can be implemented in the vehicle audio system of Figure 1, according to various embodiments;
Figure 4 illustrates an exemplary head unit that can be implemented in the vehicle audio system of Figure 1, according to various embodiments;
Figure 5 is a conceptual diagram of the audio mapping table of Figure 4, according to various embodiments; and
Figure 6 is a flow diagram of method steps for routing audio signals to different sets of speakers within a vehicle, according to various embodiments.

### DETAILED DESCRIPTION

In the following description, numerous specific details are set forth to provide a more thorough understanding of certain specific embodiments. However, it will be apparent to one of skill in the art that other embodiments may be practiced without one or more of these specific details or with additional specific details.

The embodiments are described in part below with reference to flowchart illustrations and/or block diagrams of methods, systems, and computer program products and data structures according to embodiments herein. It will be understood that each block of the illustrations, and combinations of blocks, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the block or blocks.

### VEHICLE AUDIO SYSTEM

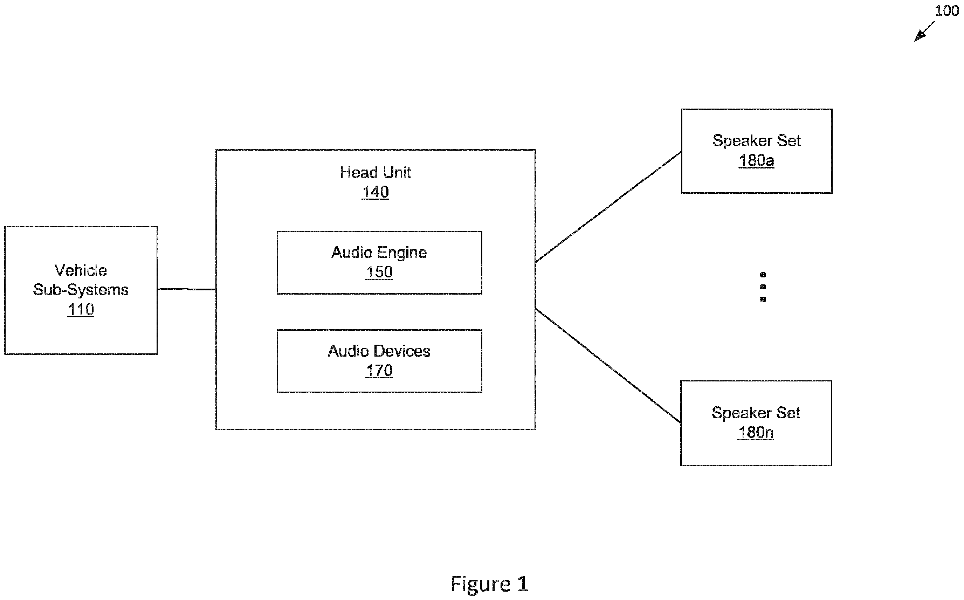

Figure 1 is a block diagram of a vehicle audio system 100 configured to implement one or more aspects of the various embodiments. The vehicle audio system 100 includes vehicle sub-systems 110, a head unit 140, and a plurality of speaker sets 180 interconnected via a bus, network, or any other feasible electrical connections. The vehicle sub-systems 110, head unit 140, and plurality of speaker sets 180 are each installed in a vehicle.

Each speaker set 180 comprises a set of one or more speakers. Each speaker set 180 receives an audio signal and reproduces/generates audio sound (audio content) within the vehicle interior based on the audio signal. The plurality of speaker sets 180 are positioned at various locations within the interior of the vehicle. For example, speaker sets 180 may be placed on the front dashboard, the door panels, and the rear panels of the vehicle. The head unit 140 includes an audio engine 150 that provides audio content to the interior of the vehicle via the plurality of speaker sets 180 (such as 180a-180n). In these embodiments, the logic of the audio engine 150 is located in the head unit 140. In other embodiments, the logic of the audio engine is external to the head unit 140, for example, in a separate hardware unit.

The audio engine 150 receives audio signals from vehicle sub-systems 110 and routes the audio signals to one or more speaker sets in the plurality of speaker sets 180 based on the received audio signals. For example, the audio engine 150 may receive an audio signal from a particular vehicle sub-system 110 and select one or more speaker sets in the plurality of speaker sets 180 to route the audio signal for presentation. The audio engine 150 may select the one or more speaker sets based on the received audio signal. For example, the audio engine 150 may select the one or more speaker sets based on the particular vehicle sub-system 110 that transmitted the audio signal. As another example, the audio engine 150 may select the one or more speaker sets based on the type of audio content detected within the received audio signal. In some embodiments, the audio engine 150 selects the one or more speaker sets for receiving the audio signal via a mapping table.

The head unit 140 may further include various audio devices 170 that are controllable by the audio engine 150 to perform the embodiments described herein. In other embodiments, the various audio devices 170 are external to the head unit 140 but connected with the audio engine 150 to enable control of the various audio devices 170 to perform the embodiments described herein. For example, the audio devices 170 may include one or more amplifiers (such as multiple-channel amplifiers), a preamplifier, and one or more signal processors. For example, the audio engine 150 may be coupled to the preamplifier, which in turn, is coupled to the amplifiers, which in turn, are coupled to the plurality of speaker sets 180 within the vehicle. The audio engine 150 may control the preamplifier to route audio signals to one or more amplifiers or one or more channels of an amplifier, which in turn, transmit amplified audio signals to one or more speaker sets 180 in the plurality of speaker sets 180. In this manner, the audio engine 150 may select which speaker sets 180 in the plurality of speaker sets 180 to route received audio signals for reproduction. The audio devices 170 may further include analog-to-digital (A/D) converters for receiving and processing analog audio signals, as well as digital-to-analog (D/A) converters for enabling reproduction of digital audio signals at the plurality of speaker sets 180. The audio devices 170 may further include devices for preforming filtering, statistical analysis, heuristic processing, acoustic processing, and/or other types of data processing and analysis of audio signals. For example, the audio devices 170 may filter an audio signal to separate out a particular signal that is intended to be broadcast to one or more of the occupants of the vehicle. For example, the audio devices 170 may include one or more signal processors used to detect particular audio content (such as a cell phone call or music) contained in the received audio signals.

In some embodiments, a speaker set 180 is located on an occupant-centered component having an asymmetric speaker layout. The occupant-centered component comprises an interior vehicle component, wherein an occupant location is proximate to a center of the interior vehicle component. For example, a seating location of an occupant is proximate to the center of the occupant-centered component, or a head location of an occupant is proximate to the center of the occupant-centered component. In some embodiments, the occupant-centered component comprises a seat (such as a front passenger seat), wherein an occupant is seated proximate to the center of the seat. In other embodiments, the occupant-centered component comprises a headrest, wherein the head of an occupant is located proximate to the center of the headrest. In further embodiments, the occupant-centered component comprises a headliner, wherein the head of an occupant is located proximate to the center of the headliner. The headliner comprises a portion of the vehicle ceiling just above an occupant where speakers may be placed.

In some embodiments, a first speaker set 180 is located only on one side of an occupant-centered component, which provides an asymmetric speaker layout for the occupant-centered component. In these embodiments, the occupant-centered component includes one or more speakers only on a single side (left or right side). For example, a first speaker set 180 is located only on the left side of the occupant-centered component, and no speakers are located on the right side of the occupant-centered component. For example, a first speaker set 180 is located only on the right side of the occupant-centered component, and no speakers are located on the left side of the occupant-centered component. Thus, the occupant-centered component includes one or more speakers only on a first side, and does not include any speakers on a second side of the occupant-centered component, the second side being opposite to the first side.

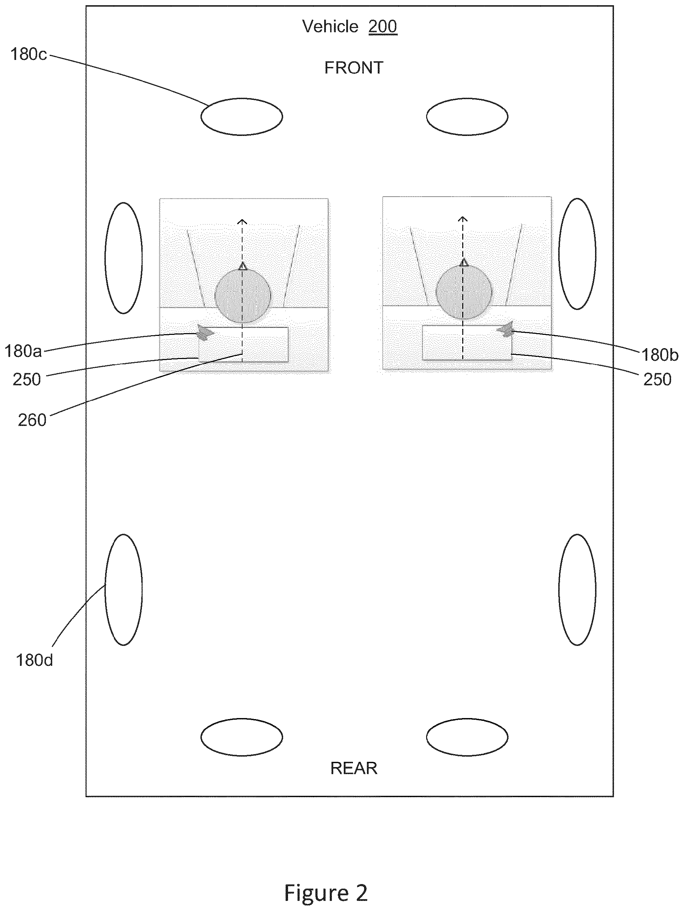

Figure 2 illustrates an exemplary asymmetric speaker layout that can be implemented in the vehicle audio system of Figure 1, according to various embodiments. As shown, a plurality of speaker sets 180 are positioned at various locations within the interior of a vehicle 200. For example, speaker sets 180 may be placed on the front dashboard, the door panels, and the rear panels of the vehicle 200. The vehicle 200 also includes one or more occupant-centered components 250. A speaker set 180 is also located on a single side (left or right side) of each occupant-centered component 250. Note that the left side and right side of the occupant-centered component 250 is based on the front side of the vehicle 200. Thus, the left side of the occupant-centered component 250 also corresponds to the left side of the occupant location and the right side of the occupant-centered component 250 also corresponds to the right side of the occupant location. The occupant-centered component 250 comprises an interior vehicle component, wherein an occupant location is proximate to a center 260 of the interior vehicle component.

In the example of Figure 2, a speaker set 180 is located on the outer/outboard side (the side closest to the exterior of the vehicle 200) of the occupant-centered component 250. Also, in the example of Figure 2, the occupant-centered component 250 comprises a headrest of a passenger seat, whereby a speaker set 180 is located proximate to the outer/outboard ear of the occupant of that seat. The speaker set 180 is also directed/oriented towards the outer/outboard ear of the occupant.

In this manner, by mounting the speaker set 180 in the headrests directed toward the outer ear of the occupant, audio content separation is achieved based on physical separation of the speaker set 180 and the head-shadowing caused by the head of the occupant blocking the sound from the speaker set 180 from traveling throughout the rest of the vehicle 200. By orienting/pointing the speaker set 180 towards the intended occupant, most of the acoustic energy is passively directed toward the intended occupant, and therefore, much less acoustic energy is directed towards the other occupants and regions of the vehicle. Thus, by placing and directing the speaker set 180 proximate and towards the ear of the occupant, substantially all of the audio content broadcast by the speaker set 180 may be audible to the occupant of that seat, and the audio content may be substantially less audible to the other occupants/passengers in the vehicle 200.

In other embodiments, the occupant-centered component 250 comprises a seat (such as a single passenger front seat), wherein an occupant is seated proximate to the center of the seat. In these embodiments, the speaker set 180 is located on an outboard side of the seat and is directed/oriented towards the outer side of the occupant. Audio content separation is achieved based on physical separation of the speaker set 180 and the body-shadowing caused by the body of the occupant blocking the sound from the speaker set 180 from traveling throughout the rest of the vehicle 200.

In further embodiments, the occupant-centered component 250 comprises a headliner, wherein the head of an occupant is located proximate to the center of the headliner. The headliner comprises a portion of the vehicle ceiling just above an occupant where speakers may be placed. In these embodiments, the speaker set 180 is located on an outboard side of the headliner and is directed/oriented towards the outer ear of the occupant. Audio content separation is achieved based on physical separation of the speaker set 180 and the head-shadowing caused by the head of the occupant blocking the sound from the speaker set 180 from traveling throughout the rest of the vehicle 200. In additional embodiments, the occupant-centered component comprises another type of interior vehicle component.

In some embodiments, the speaker set 180 comprises a single speaker. In other embodiments, the speaker set 180 comprises two or more speakers. For example, and without limitation, the same audio content may be transmitted to multiple speakers of the speaker set 180 for a selected occupant of the vehicle. In this manner, the same audio content may be played by the multiple speakers without requiring additional processing of multiple different audio signals. That is, the same audio signal (audio content) may be played back by each of the multiple speakers of the speaker set 180.

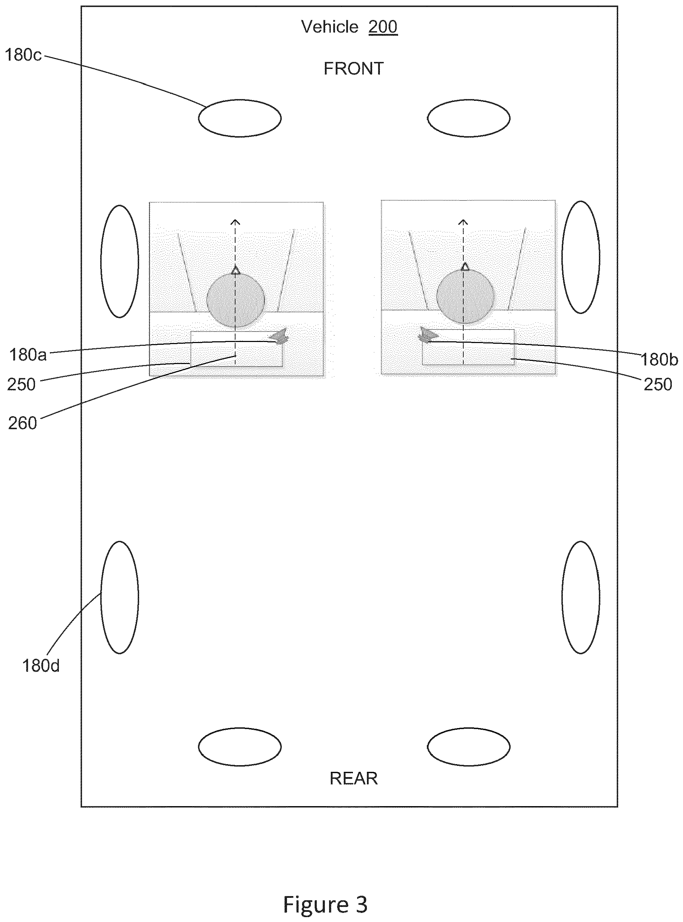

Figure 3 illustrates an exemplary alternative asymmetric speaker layout that can be implemented in the vehicle audio system of Figure 1, according to various embodiments. As shown, a plurality of speaker sets 180 are positioned at various locations within the interior of a vehicle 200. A speaker set 180 is also located on a single side (left or right side) of each occupant-centered component 250. The occupant-centered component 250 comprises an interior vehicle component, wherein an occupant location is proximate to a center 260 of the interior vehicle component. In the example of Figure 3, a speaker set 180 is located on the inner/inboard side (the side farthest from the exterior of the vehicle 200) of the occupant-centered component 250. Also, in the example of Figure 3, the occupant-centered component 250 comprises a headrest of a passenger seat, whereby a speaker set 180 is located proximate to the inner/inboard ear of the occupant of that seat. The speaker set 180 is also directed/oriented towards the inner/inboard ear of the occupant. In this manner, by mounting the speaker set 180 in the headrests directed toward the inner ear of the occupant, audio content separation is achieved based on physical separation of the speaker set 180 and the head-shadowing caused by the head of the occupant blocking the sound from the speaker set 180 from traveling throughout the rest of the vehicle 200.

In other embodiments, the occupant-centered component 250 comprises a seat, wherein the speaker set 180 is located on an inboard side of the seat and is directed/oriented towards the inner side of the occupant. Audio content separation is achieved based on physical separation of the speaker set 180 and the body-shadowing caused by the body of the occupant blocking the sound from the speaker set 180 from traveling throughout the rest of the vehicle 200. In further embodiments, the occupant-centered component 250 comprises a headliner, wherein the speaker set 180 is located on an inboard side of the headliner and is directed/oriented towards the inner ear of the occupant. Audio content separation is achieved based on physical separation of the speaker set 180 and the head-shadowing caused by the head of the occupant blocking the sound from the speaker set 180 from traveling throughout the rest of the vehicle 200. In additional embodiments, the occupant-centered component 250 comprises another type of interior vehicle component.

In the embodiments of Figures 2-3, each speaker set 180 may be located at a same relative position relative to a seating position of an occupant of the vehicle 200. For example, and without limitation, each speaker may be located at a left ear position of the occupant of the vehicle 200. In other embodiments, each speaker set 180 may be located at a different position that is mirrored relative to another seating position of the vehicle 200. For example, and without limitation, each speaker set 180 may be located at an inner ear position of the occupant of the vehicle 200, where the inner ear position corresponds to the ear positioned closer to the center of the vehicle 200. In addition, in other embodiments, each speaker set 180 may be located at any technically feasible position relative to a seating position of an occupant of the vehicle 200.

Persons skilled in the art will understand that a speaker set 180 may be arranged asymmetrically relative to a designated occupant of the vehicle and an occupant-centered component 250 in any technically feasible manner that achieves acoustic separation of the audio signals. A choice among the speaker layout provided in the embodiments of Figure 2, the speaker layout provided in the embodiments of Figure 3, and any other technically feasible speaker layout will be based on performance of the acoustic separation in the vehicle audio system 100. Such performance may be dependent on the acoustics of the particular vehicle design, the placements of the seats relative to one another, and the placements of the seats within the vehicle 200, among other things.

### AUDIO ENGINE

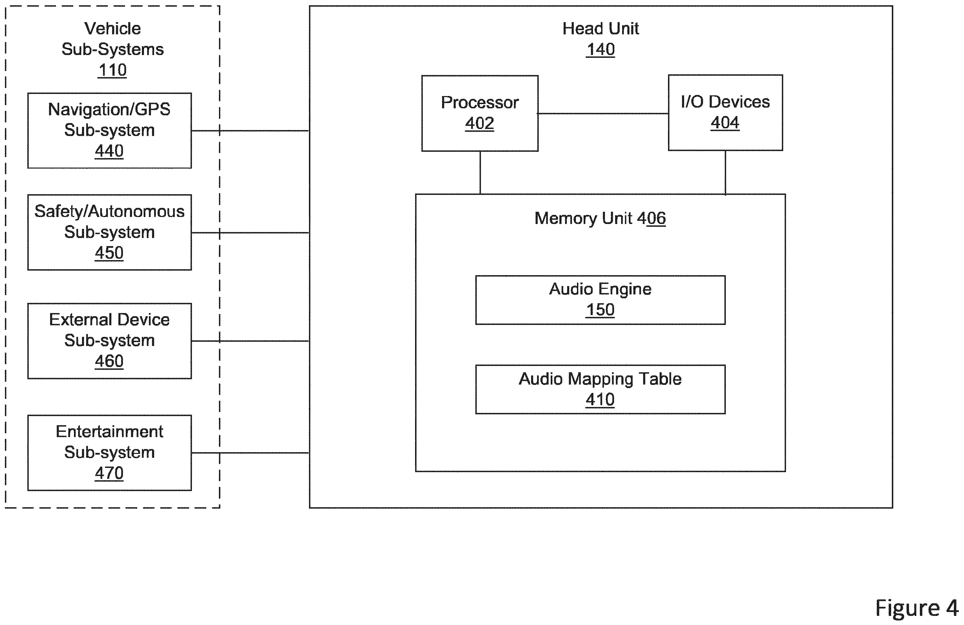

As discussed above in relation to Figure 1, the vehicle audio system 100 includes vehicle sub-systems 110 and a head unit 140 that executes an audio engine 150. Based on audio signals received from the vehicle sub-systems 110, the audio engine 150 provides audio content to the interior of the vehicle via the plurality of speaker sets 180 (such as 180a-180n). Figure 4 illustrates an exemplary head unit 140 that can be implemented in the vehicle audio system of Figure 1, according to various embodiments. As shown, the head unit 140 comprises at least one processor 402, input/output (I/O) devices 404, and a memory unit 406, coupled together.

In general, a processor 402 may be any technically feasible processing device or hardware unit capable of processing data and executing software applications and program code. The processor 402 of the head unit 140 allows on-board processing of instructions and commands, particularly as part of an application layer and/or API of the head unit 140. The processor 402 executes the software and performs the functions and operations set forth in the embodiments described herein. For example, a processor 402 may comprise a central processing unit (CPU), a graphics processing unit (GPU), a digital signal processor (DSP), an application-specific integrated circuit (ASIC), a field programmable gate array (FPGA) or other programmable logic device, discrete gate or transistor logic, discrete hardware components, or any combination of different processing units, such as a CPU configured to operate in conjunction with a GPU, or many CPUs configured to work together through cloud computing.

The memory unit 406 may include a hard disk, a random access memory (RAM) module, a flash memory unit, or any other type of memory unit or combination thereof. Processor and I/O devices read data from and write data to memory 406. The memory unit 406 is configured to store software application(s) and data. Instructions from the software constructs within the memory unit 406 are executed by processors to enable the operations and functions described herein. In various embodiments, the memory unit 406 is configured to store an audio engine 150 and an audio mapping table 410 for performing embodiments herein. The head unit 140 may be connected to a storage device (not shown) comprising a persistent storage device, such as a hard disk drive (HDD) or flash memory. The storage device stores, for example, the audio engine 150 and the audio mapping table 410.

The processor 402 is configured to execute the audio engine 150 to provide an underlying functionality of a vehicle audio system 100 as described in various embodiments herein. In other embodiments, the audio engine 150 is executed within a stand-alone audio unit that is connected with the head unit 140. In these embodiments, the audio unit comprises a memory unit and processor for executing the audio engine 150 to provide an underlying functionality of a vehicle audio system 100 as described in various embodiments herein. The audio engine 150 may comprise an add-on feature, part of the original equipment manufacturer (OEM) controls of the vehicle, or a combination of both.

The I/O devices 404 are also coupled to memory 406 and comprise as a front end interface located in the vehicle that allows the user to interact with the head unit 140 and vehicle sub-systems 110 via user inputs, such as voice commands and touch inputs. The I/O devices 404 include devices capable of receiving user inputs, such as a microphone (for receiving voice commands), a keyboard, a mouse, a control stick, a trackball, and so forth, as well as devices capable of providing output, such as a display, speaker, and so forth. Additionally, I/O devices may include devices capable of both receiving input and providing output, such as a touchscreen, a universal serial bus (USB) port, and so forth. For example, and without limitation, I/O devices 404 could include wired and/or wireless communication devices that send data to and/or receive data from remote databases, such as Cloud-based audio classification databases.

The head unit 140 is coupled to one or more vehicle sub-systems 110, such as a navigation/GPS sub-system 440, safety/autonomous sub-system 450, external device sub-system 460, and entertainment sub-system 470. In other embodiments, the one or more vehicle sub-systems 110 include other vehicle sub-systems. In some embodiments, the audio engine 150 receives audio signals from the vehicle sub-systems 110, and routes the audio signals to one or more speaker sets in the plurality of speaker sets 180 within the vehicle 200 based on the received audio signals. In some embodiments, the communications/interactions between the vehicle sub-systems 110 and the audio engine 150 are implemented via Controller Area Network (CAN), and/or LIN Local Interconnect Network (LIN), MOST (Media Oriented Systems Transport), IEEE 1394, or other suitable technologies. In other embodiments, the communications/interactions between the vehicle sub-systems 110 and the audio engine 150 are implemented via other protocols and/or bus standards configured to allow vehicle components to communicate with each other.

The audio engine 150 may receive audio signals from the navigation/GPS sub-system 440 comprising audio navigation prompts, such as "turn left on Main Street," "turn right on 1^{st} Avenue," "stay on Route 1," and the like. Such audio navigation prompts may be useful only to the driver of the vehicle but disturbs other occupants within the vehicle. Therefore, the audio engine 150 may route the audio signals received from the navigation/GPS sub-system 440 to only a first speaker set 180 located at a first occupant-centered component 250 corresponding to the driver, such as a headrest, seat, or headliner of the driver. In these embodiments, the audio engine 150 routes the audio navigation prompts to only the first speaker set 180 in the plurality of speaker sets 180 and does not route the audio navigation prompts to the remaining speaker sets 180 in the plurality of speaker sets 180 installed within the vehicle. Further, as the first occupant-centered component 250 only includes the first speaker set 180 on a first side and does not include another speaker set 180 on a second opposite side of the first occupant-centered component 250, the audio engine 150 routes the audio navigation prompts to only the first speaker set 180 on the first side of the first occupant-centered component 250, and does not route the audio navigation prompts to a speaker set 180 on the second opposite side of the first occupant-centered component 250. In this manner, a driver of the vehicle receives the audio navigation prompts, but other occupants of the vehicle would not be disturbed by the audio navigation prompts. Accordingly, the techniques described herein could direct audio navigation prompts to the driver of the vehicle such that these audio navigation prompts are audible only to the driver of the vehicle, and are substantially less audible or inaudible to the other occupants of the vehicle.

The audio engine 150 may receive audio signals from the safety/autonomous sub-system 450 comprising audio safety prompts, such as "car in left blind spot," "object near right corner," and the like. Such audio safety prompts may be useful only to the driver of the vehicle but disturbs other occupants within the vehicle. Therefore, the audio engine 150 may route the audio signals received from the safety/autonomous sub-system 450 to only a first speaker set 180 located at a first occupant-centered component 250 corresponding to the driver, such as a headrest, seat, or headliner of the driver. In these embodiments, the audio engine 150 routes the audio safety prompts to only the first speaker set 180 in the plurality of speaker sets 180 and does not route the audio safety prompts to the remaining speaker sets 180 in the plurality of speaker sets 180 installed within the vehicle. Further, as the first occupant-centered component 250 only includes the first speaker set 180 on a first side and does not include another speaker set 180 on a second opposite side of the first occupant-centered component 250, the audio engine 150 routes the audio safety prompts to only the first speaker set 180 on the first side of the first occupant-centered component 250, and does not route the audio safety prompts to a speaker set 180 on the second opposite side of the first occupant-centered component 250.

The audio engine 150 may receive audio signals from the entertainment sub-system 470. The entertainment sub-system 470 enables audio/video functions that provide, for example, audio and/or video signals that are output to speakers and/or a video display (not shown). The entertainment sub-system 470 include entertainment components comprising an analog or digital radio, CD/DVD player, or other media sources/players. Thus, the audio engine 150 may receive audio signals from the entertainment sub-system 470 comprising audio entertainment content, such as music, videos, or other types of entertainment content received from the various media sources/players of the entertainment sub-system 470. Such audio entertainment content may be enjoyed by all occupants of the vehicle. Therefore, the audio engine 150 may route the audio signals received from the entertainment sub-system 470 to all speaker sets 180 in the plurality of speaker sets 180 installed in the vehicle 200.

The audio engine 150 may receive audio signals from the external device sub-system 460. The external device sub-system 460 comprises components required for providing a wired or wireless interface between the head unit 140 and various external devices. Examples of external devices include a mobile communication device, cell phone (such as a smart phone or a PDA), tablet or laptop, memory stick, media (MP3/MP4) player, mass storage device, portable navigation device, digital video camera, or the like. The external device sub-system 460 may communicate with an external devices via wireless transmission (e.g., using Wi-Fi, Bluetooth®, or other types of wireless transmission), or wired transmission (e.g., using USB, HDMI, or other types of wired transmission). The audio signals received from external devices may include a wide variety of audio content, such as audio entertainment content (such as music) received from a media source, an audio phone call received from a cell phone, and the like. Audio entertainment content may be enjoyed by all occupants of the vehicle, whereas an audio phone call may be useful only to the driver of the vehicle but disturbs other occupants within the vehicle. Thus, for audio signals received from the external device sub-system 460, the audio engine 150 may first perform signal processing operations on the audio signal to detect the type of audio content in the audio signal. The audio engine 150 then maps the type of audio content to one or more speaker sets 180 via the audio mapping table 410. For example, the audio engine 150 may route audio entertainment content to all speaker sets 180 in the plurality of speaker sets 180 and route audio phone calls to only a first speaker set 180 located at a first occupant-centered component 250 corresponding to the driver.

In some embodiments, the audio engine 150 maps a received audio signal to one or more speaker sets 180 via the audio mapping table 410. In some embodiments, the audio mapping table 410 is generated via interactions with remote databases, such as Cloud-based audio classification databases, that provide information regarding, for example, which speaker sets 180 correspond to which occupants in the vehicle, and which audio signals map to which speaker sets 180.

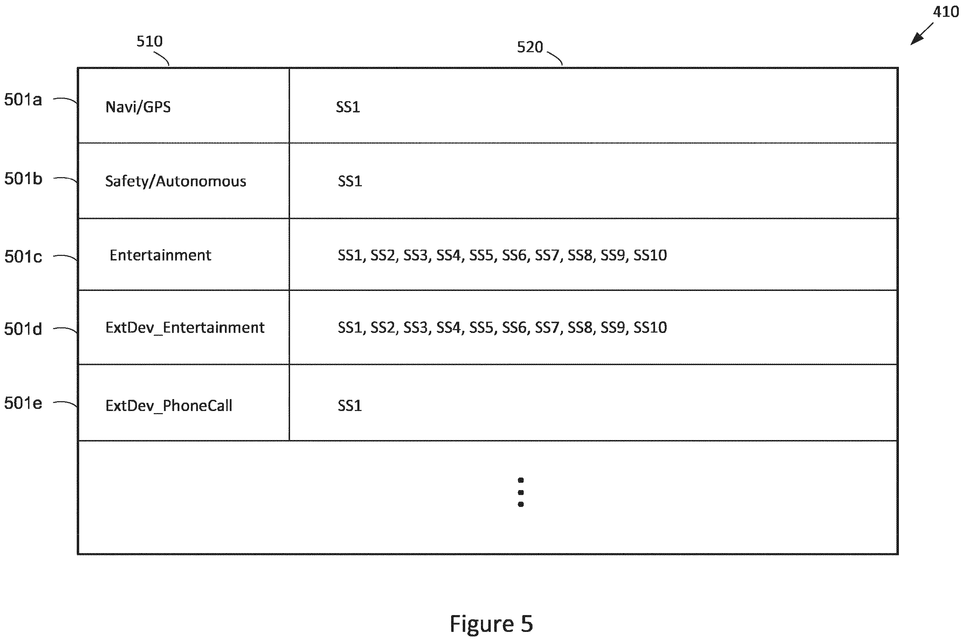

Figure 5 is a conceptual diagram of the audio mapping table 410 of Figure 4, according to various embodiments. For each received audio signal, the audio engine 150 determines/selects one or more speaker sets 180 to receive/route the received audio signal via the audio mapping table 410. As shown, the audio mapping table 410 comprises a plurality of mapping entries 901 (such as 901a, 901b, 901c, etc.). Each mapping entry 901 comprises a mapping from a received audio signal 510 (received from a particular vehicle sub-system 110) to a set of one or more speaker sets 180 within the vehicle 200. Each speaker set 180 is identified by a unique identifier, such as SS1, SS2, SS3, etc.

For example, a first mapping entry 901a maps an audio signal 510 received from the navigation/GPS sub-system 440 to a first speaker set 180 (shown as "SS1"). The first speaker set 180 may be located at a first occupant-centered component 250 corresponding to the driver, such as a headrest, seat, or headliner of the driver. In these embodiments, the audio signal 510 received from the navigation/GPS sub-system 440 is routed to only the first speaker set 180 in the plurality of speaker sets 180, and is not routed to any other speaker sets 180 in the plurality of speaker sets 180. For example, a second mapping entry 901b maps an audio signal 510 received from the safety/autonomous sub-system 450 to only the first speaker set 180 (shown as "SS1") in the plurality of speaker sets 180. For example, a third mapping entry 901c maps an audio signal 510 received from the entertainment sub-system 470 to all speaker sets 180 in the plurality of speaker sets 180 (shown as "SS1" - "SS10").

In some embodiments, the audio mapping table 410 includes multiple mapping entries 901 for audio signals 510 received from a particular vehicle sub-system 110, each mapping entry 901 being based on the particular vehicle sub-system 110 sending the audio signal as well as the type of audio content detected in the audio signal. For example, a fourth mapping entry 901d maps an audio signal 510 received from the external device sub-system 460 and comprising entertainment content to all speaker sets 180 in the plurality of speaker sets 180 (shown as "SS1" - "SS10"). For example, a fifth mapping entry 901e maps an audio signal 510 received from the external device sub-system 460 and comprising a phone call to only the first speaker set 180 (shown as "SS1") in the plurality of speaker sets 180.

In other embodiments, the audio signals 510 received from the navigation/GPS sub-system 440, the safety/autonomous sub-system 450, and the external device sub-system 460 (comprising a phone call) are each mapped (via the mapping table 410) to only a second speaker set 180 (SS2) in the plurality of speaker sets 180. The second speaker set 180 may be located at a second occupant-centered component 250 corresponding to the front passenger, such as a headrest, seat, or headliner of the front passenger. In further embodiments, the audio signals 510 received from the navigation/GPS sub-system 440, the safety/autonomous sub-system 450, and the external device sub-system 460 (comprising a phone call) are each mapped (via the mapping table 410) to only the first speaker set 180 (SS1) and the second speaker set 180 (SS2) in the plurality of speaker sets 180.

The audio engine 150 maps a received audio signal to one or more speaker sets 180 via the audio mapping table 410, and transmits/routes the audio signal to the one or more speaker sets 180, which broadcasts/reproduces the audio signal to provide audio content to one or more occupants of the vehicle 200. In some embodiments, multiple audio signals from multiple vehicle sub-systems 110 are broadcast by the plurality of speaker sets 180 concurrently/simultaneously. For example, an audio signal is first received from the entertainment sub-system 470 and routed to all speaker sets 180 in the plurality of speaker sets 180 (SS1 - SS10). While the plurality of speaker sets 180 broadcasts the audio signal from the entertainment sub-system 470, an audio signal may then be received from the navigation/GPS sub-system 440 and routed to only the first speaker set 180 (SS1). Thus, while the first speaker set 180 (SS1) broadcasts the audio signal received from the navigation/GPS sub-system 440 to the driver, the remaining speaker sets 180 (SS2 - SS10) broadcasts the audio signal from the entertainment sub-system 470 concurrently/simultaneously.

In some embodiments, the audio signals 510 received from the navigation/GPS sub-system 440, the safety/autonomous sub-system 450, and the external device sub-system 460 (comprising a phone call) have priority over audio signals 510 received from other vehicle sub-systems 110 and/or other types of audio content. For example, if the first speaker set 180 (SS1) is initially broadcasting an audio signal received from the entertainment sub-system 470, any audio signals 510 subsequently received from the navigation/GPS sub-system 440, the safety/autonomous sub-system 450, or the external device sub-system 460 (comprising a phone call) has priority and is routed to the first speaker set 180 (SS1) for broadcasting to the driver, wherein the first speaker set 180 (SS1) stops broadcasting the audio signal received from the entertainment sub-system 470. Likewise, if the first speaker set 180 (SS1) is initially broadcasting an audio signal 510 received from the navigation/GPS sub-system 440, the safety/autonomous sub-system 450, or the external device sub-system 460 (comprising a phone call), an audio signal subsequently received from the entertainment sub-system 470 does not have priority and is not routed to the first speaker set 180 (SS1), wherein the first speaker set 180 (SS1) continues broadcasting the audio signal received from the navigation/GPS sub-system 440, the safety/autonomous sub-system 450, or the external device sub-system 460 (comprising a phone call). However, the audio signal subsequently received from the entertainment sub-system 470 is still routed to the remaining speaker sets 180 (SS2 - SS10).

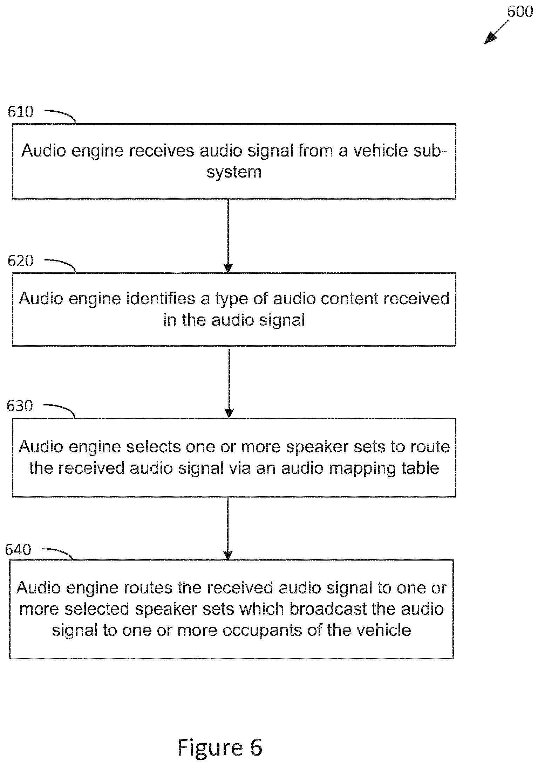

Figure 6 is a flow diagram of method steps for routing audio signals to different sets of speakers within a vehicle, according to various embodiments. Although the method steps are described in conjunction with the systems of Figures 1-5, persons skilled in the art will understand that the method steps can be performed in any order by any system. In some embodiments, the method 600 may be performed by the audio engine 150 in conjunction with the vehicle sub-systems 110 and the plurality of speaker sets 180 within a vehicle.

The method 600 begins when the audio engine 150 receives (at step 610) an audio signal from a vehicle sub-system 110. For example, the audio signal may be received from a navigation/GPS sub-system 440, safety/autonomous sub-system 450, external device sub-system 460, or entertainment sub-system 470. Optionally, the audio engine 150 identifies (at step 620) a type of audio content that is received in the audio signal. For example, the audio engine 150 may perform this step for audio signals received from particular vehicle sub-systems 110, such as the external device sub-system 460.

The audio engine 150 selects (at step 630) one or more speaker sets 180 to which to route the received audio signal based on the audio signal via an audio mapping table 410. For example, the audio engine 150 determines the one or more speaker sets 180 to route the received audio signal based on the particular vehicle sub-system 110 sending the audio signal and/or the type of audio content identified in the audio signal. The audio engine 150 transmits/routes (at step 640) the received audio signal to the one or more selected speaker sets 180, which in turn, broadcasts the audio signal (audio content) to one or more occupants of the vehicle. The method 600 then continues at step 610 whereby the audio engine 150 receives a next audio signal.

In sum, a vehicle audio system provides separation of audio content between vehicle occupants via an asymmetric speaker layout and an audio engine. The vehicle audio system includes a first set of speakers located at an occupant-centered component having an asymmetric speaker layout. The occupant-centered component comprises an interior vehicle component wherein a location of a first occupant is proximate to a center of the occupant-centered component. Examples of an occupant-centered component include a headrest or a front passenger seat. The occupant-centered component includes a speaker set at only a left side or a right side of the occupant-centered component to provide the asymmetric speaker layout. However, the occupant-centered component does not include speakers at both the left side and the right side. The first set of speakers is directed towards the first occupant to provide audio content to the first occupant. The single speaker set is configured and arranged asymmetrically relative to the occupant-centered component as well as the occupant corresponding to the occupant-centered component. By orienting/pointing a speaker set towards the intended occupant, most of the acoustic energy is passively directed toward the intended occupant, and therefore, much less acoustic energy is directed towards the other occupants and regions of the vehicle (referred to herein as occupant shadowing). Thus, the orientation of the speaker set naturally and passively allows for "funneling" of sound to intended occupants of the vehicle. In alternative embodiments, the vehicle audio system also includes a passive acoustic absorber or material for blocking/absorbing acoustic energy/sound. In this manner, the single speaker set is arranged so that substantially all of the audio content broadcast by that the speaker set is audible only to the corresponding occupant. Further, the broadcast audio content is at least partially attenuated at seating positions of other occupants of the vehicle and is therefore substantially less audible to other occupants of the vehicle.

The vehicle audio system further includes an audio engine coupled to a plurality of sets of speakers installed within the vehicle. The audio engine receives audio signals from various vehicle sub-systems and routes the audio signals to one or more sets of speakers within the vehicle based on the received audio signal. The audio engine may determine which sets of speakers to route a received audio signal using a mapping table. For example, the audio engine may be configured to route audio music to all sets of speakers installed within the vehicle. For example, the audio engine may be configured to route audio navigation prompts or cell phone calls to only the first set of speakers located at a driver's headrest or seat. In this manner, the disclosed techniques rely on occupant shadowing and passive signal routing to achieve separation of audio content within a vehicle.

At least one technical advantage of the disclosed techniques relative to the prior art is that the disclosed techniques enable audio content to be transmitted separately to different vehicle occupants via a simple, small, and lightweight vehicle audio system. In that regard, the vehicle audio system includes a first set of speakers located at an occupant-centered component (such as a headrest or seat) having an asymmetric speaker layout. For example, the occupant-centered component could include speakers at only the left side or the right side of the occupant-centered component, but would not include speakers at both the left side and the right side. The first set of speakers is directed towards a first vehicle occupant to provide audio content to the first vehicle occupant. By orienting/pointing the first set of speakers towards the first vehicle occupant, most of the acoustic energy is passively directed toward the first vehicle occupant, and therefore, much less acoustic energy is directed towards the other occupants and regions of the vehicle. An audio engine routes particular audio signals to only the first set of speakers and not to other sets of speakers within the vehicle. For example, the audio engine could route audio navigation prompts to only the first set of speakers located at within the driver seat headrest, but not to any of the other sets of speakers within the vehicle. In this manner, the disclosed techniques allow audio content to be transmitted separately to different vehicle occupants without relying on complex sound cancellation techniques, while also reducing the number of audio components relative to prior approaches. These technical advantages represent one or more technological advancements over prior art solutions.

Aspects of the subject matter described herein are set out in the following numbered clauses.
1. In some embodiments, a vehicle audio system, comprising: a first set of speakers located at a first side of an interior vehicle component having an asymmetric speaker layout; and an audio engine that is coupled to the first set of speakers and, in operation, routes a first audio signal to the first set of speakers to provide audio content to a first occupant location within a vehicle.
2. The vehicle audio system of clause 1, wherein the asymmetric speaker layout includes only the first set of speakers.
3. The vehicle audio system of any of clauses 1-2, wherein the asymmetric speaker layout does not include another set of speakers located at a second side of the interior vehicle component that is opposite to the first side of the interior vehicle component.
4. The vehicle audio system of any of clauses 1-3, wherein the first occupant location is proximate to a center of the interior vehicle component.
5. The vehicle audio system of any of clauses 1-4, wherein the interior vehicle component comprises at least one of a headrest, seat, or headliner.
6. The vehicle audio system of any of clauses 1-5, further comprising multiple sets of speakers that include the first set of speakers, wherein the audio engine routes the first audio signal to only the first set of speakers and not to any other set of speakers within the multiple sets of speakers.
7. The vehicle audio system of any of clauses 1-6, further comprising multiple sets of speakers that include the first set of speakers, wherein the audio engine routes the first audio signal to all sets of speakers within the multiple sets of speakers.
8. The vehicle audio system of any of clauses 1-7, wherein the audio engine is further coupled to at least one vehicle sub-system and, in operation, receives the first audio signal from the at least one vehicle sub-system and routes the first audio signal to the first set of speakers.
9. The vehicle audio system of any of clauses 1-8, wherein the at least one vehicle sub-system comprises at least one of a navigation sub-system, a safety sub-system, an external device sub-system, or an entertainment sub-system.
10. The vehicle audio system of any of clauses 1-9, further comprising multiple sets of speakers that include the first set of speakers, wherein the audio engine determines the first set of speakers within the multiple sets of speakers to route the first audio signal via an audio mapping table.
11. In some embodiments, a computer-implemented method comprising: routing, at an audio engine, a first audio signal to a first set of speakers to provide audio content to a first occupant location within a vehicle, wherein the first set of speakers is located at a first side of an interior vehicle component having an asymmetric speaker layout.
12. The computer-implemented method of clause 11, wherein the asymmetric speaker layout includes only the first set of speakers.
13. The computer-implemented method of any of clauses 11-12, further comprising multiple sets of speakers that include the first set of speakers, wherein routing the first audio signal comprises routing the first audio signal to only the first set of speakers and not to any other set of speakers within the multiple sets of speakers.
14. The computer-implemented method of any of clauses 11-13, wherein the audio engine is coupled to at least one vehicle sub-system, the method further comprising: receiving, at the audio engine, the first audio signal from the at least one vehicle sub-system.
15. The computer-implemented method of any of clauses 11-14, wherein the at least one vehicle sub-system comprises at least one of a navigation sub-system, a safety sub-system, an external device sub-system, or an entertainment sub-system.
16. In some embodiments, one or more non-transitory computer-readable media storing instructions that, when executed by one or more processors, cause the one or more processors to perform the steps of: routing, at an audio engine, a first audio signal to a first set of speakers to provide audio content to a first occupant location within a vehicle, wherein the first set of speakers is located at a first side of an interior vehicle component having an asymmetric speaker layout.
17. The one or more non-transitory computer-readable media of clause 16, wherein the asymmetric speaker layout does not include another set of speakers located at a second side of the interior vehicle component that is opposite to the first side of the interior vehicle component.
18. The one or more non-transitory computer-readable media of any of clauses 16-17, further comprising, determining the first set of speakers within multiple sets of speakers to route the first audio signal via an audio mapping table.
19. The one or more non-transitory computer-readable media of any of clauses 16-18, wherein the audio engine is coupled to at least one vehicle sub-system, further comprising: receiving, at the audio engine, the first audio signal from the at least one vehicle sub-system; and determining, at the audio engine, the first set of speakers within multiple sets of speakers to route the first audio signal based on the first audio signal.
20. The one or more non-transitory computer-readable media of any of clauses 16-19, wherein the at least one vehicle sub-system comprises at least one of a navigation sub-system, a safety sub-system, an external device sub-system, or an entertainment sub-system.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A vehicle audio system, comprising:
a first set of speakers located at a first side of an interior vehicle component having an asymmetric speaker layout; and
an audio engine that is coupled to the first set of speakers and, in operation, routes a first audio signal to the first set of speakers to provide audio content to a first occupant location within a vehicle.

2. The vehicle audio system of claim 1, wherein the asymmetric speaker layout includes only the first set of speakers.

3. The vehicle audio system of claim 1, wherein the asymmetric speaker layout does not include another set of speakers located at a second side of the interior vehicle component that is opposite to the first side of the interior vehicle component.

4. The vehicle audio system of claim 1, wherein the first occupant location is proximate to a center of the interior vehicle component.

5. The vehicle audio system of claim 1, wherein the interior vehicle component comprises at least one of a headrest, seat, or headliner.

6. The vehicle audio system of claim 1, further comprising multiple sets of speakers that include the first set of speakers, wherein the audio engine routes the first audio signal to only the first set of speakers and not to any other set of speakers within the multiple sets of speakers.

7. The vehicle audio system of claim 1, further comprising multiple sets of speakers that include the first set of speakers, wherein the audio engine routes the first audio signal to all sets of speakers within the multiple sets of speakers.

8. The vehicle audio system of claim 1, wherein the audio engine is further coupled to at least one vehicle sub-system and, in operation, receives the first audio signal from the at least one vehicle sub-system and routes the first audio signal to the first set of speakers.

9. The vehicle audio system of claim 8, wherein the at least one vehicle sub-system comprises at least one of a navigation sub-system, a safety sub-system, an external device sub-system, or an entertainment sub-system.

10. The vehicle audio system of claim 1, further comprising multiple sets of speakers that include the first set of speakers, wherein the audio engine determines the first set of speakers within the multiple sets of speakers to route the first audio signal via an audio mapping table.

11. A computer-implemented method comprising:
routing, at an audio engine, a first audio signal to a first set of speakers to provide audio content to a first occupant location within a vehicle, wherein the first set of speakers is located at a first side of an interior vehicle component having an asymmetric speaker layout.

12. The computer-implemented method of claim 11, wherein the asymmetric speaker layout includes only the first set of speakers, and/or further comprising multiple sets of speakers that include the first set of speakers, wherein routing the first audio signal comprises routing the first audio signal to only the first set of speakers and not to any other set of speakers within the multiple sets of speakers.

13. The computer-implemented method of claim 11, wherein the audio engine is coupled to at least one vehicle sub-system, the method further comprising:
receiving, at the audio engine, the first audio signal from the at least one vehicle sub-system.

14. The computer-implemented method of claim 13, wherein the at least one vehicle sub-system comprises at least one of a navigation sub-system, a safety sub-system, an external device sub-system, or an entertainment sub-system.

15. A computer program product comprising a computer-readable storage medium including instructions that, when executed by one or more processors, cause the one or more processors to perform the method of any of claims 11-14.
